# EUROPEAN PATENT APPLICATION

(11) **EP 2 245 929 A1**
(43) Date of publication of application: **03.11.2010**
(21) Application number: 09703128.0
(22) Date of filing: 21.01.2009
(51) Int. Cl.: A01N 25/04, A01N 25/30, A01N 43/56, A01N 43/84, A01N 47/36, A01N 51/00, A01P 3/00, A01P 7/04, A01P 13/00

(54) **EMULSION COMPOSITION**

(30) Priority: 24.01.2008 JP 2008013515
(71) Applicant: Sumitomo Chemical Company, Limited, Tokyo 104-8260 (JP)
(72) Inventor: KOZUKI, Yumiko, Takarazuka-shi Hyogo 665-0836 (JP)
(74) Representative: Duckworth, Timothy John
(86) International application number: PCT/JP2009/051293
(87) International publication number: WO 2009/093742

(57) **Abstract**

Disclosed is an emulsifiable concentrate composition **characterized by** containing not less than 0.5% by weight but not more than 25% by weight of a hydrophobic agrochemically active compound, not less than 5% by weight but not more than 15% by weight of a surfactant, not less than 2% by weight but not more than 60% by weight of an aromatic hydrocarbon solvent, not less than 2% by weight but not more than 60% by weight of an ether compound represented by the following formula (1) : R¹-O-A¹-O-A²-(O-A³)ₙ-O-R² (wherein R¹ and R² respectively represent a C₁-C₃ alkyl group; A¹, A² and A³ respectively represent an ethylene group or a propylene group; and n represents 0, 1 or 2), and not less than 12% by weight but not more than 90% by weight of 1,3-dimethyl-2-imidazolidinone. The emulsifiable concentrate composition is also **characterized in that** the weight ratio of 1,3-dimethyl-2-imidazolidinone to the ether compound (1,3-dimethyl-2-imidazolidinone : ether compound) is within the range from 1 : 0.03 to 1 : 2.

## Description

### Technical Field

The present invention relates to an emulsifiable concentrate composition containing a plurality of organic solvents.

### Background Art

In an agrochemical formulation containing an agrochemically active compound, an emulsifiable concentrate composition is an easy-to-use important formulation. The emulsifiable concentrate composition is usually a homogeneous composition comprising an agrochemically active compound, a surfactant and an organic solvent and is used after diluting with a 10- to 5,000-fold amount of water. For the purpose of physical stabilization of an emulsifiable concentrate composition and a water-diluted liquid of the emulsifiable concentrate composition, an emulsifiable concentrate composition containing a plurality of organic solvents has been studied (see, for example, JP 2004-523491 A and JP 2002-501087 A).

### Disclosure of the Invention

However, it was difficult to obtain an emulsifiable concentrate composition containing a plurality of organic solvents which has improved low-temperature storage stability and has kept satisfactory emulsion stability after dilution.

Under these circumstances, the present inventors have intensively studied and found that an emulsifiable concentrate composition containing an aromatic hydrocarbon solvent, a specific ether compound and 1,3-dimethyl-2-imidazolidinone as organic solvents in a specific ratio has satisfactory low-temperature storage stability and also has satisfactory emulsion stability in the state of a water-diluted liquid. Thus, the present invention has been completed.

That is, the present invention includes the following inventions.

### [Invention 1]

An emulsifiable concentrate composition comprising:
not less than 0.5% by weight but not more than 25% by weight of a hydrophobic agrochemically active compound,
not less than 5% by weight but not more than 15% by weight of a surfactant,
not less than 2% by weight but not more than 60% by weight of an aromatic hydrocarbon solvent,
not less than 2% by weight but not more than 60% by weight of an ether compound represented by the formula (1): R¹-O-A¹-O-A²-(O-A³)ₙ-O-R² (1)
   wherein R¹ and R² each represent a C1-C3 alkyl group, A¹, A² and A³ each represent an ethylene group or a propylene group, and n represents 0, 1 or 2, and
not less than 12% by weight but not more than 90% by weight of 1,3-dimethyl-2-imidazolidinone [DMI], wherein
the weight ratio of the above DMI to the above ether compound (i.e. DMI : the ether compound) is within a range from 1 : 0.03 to 1 : 2.

### [Invention 2]

The emulsifiable concentrate composition according to Invention 1 which further comprises a formulation auxiliary in an amount of not more than 5% by weight based on the total amount and consists essentially of the hydrophobic agrochemically active compound, the surfactant, the aromatic hydrocarbon solvent, the ether compound of the formula (1), DMI and the formulation auxiliary.

### [Invention 3]

The emulsifiable concentrate composition according to Invention 1 or 2, the weight ratio of DMI to the aromatic hydrocarbon solvent (i.e. DMI : the aromatic hydrocarbon solvent) is with a range from 1 : 0.05 to 1 : 1.5.

### [Invention 4]

The emulsifiable concentrate composition according to any one of Inventions 1 to 3, wherein the weight ratio of DMI to the ether compound of the formula (1) (i.e. DMI : the ether compound) is with a range from 1 : 0.05 to 1 : 1.5.

### [Invention 5]

The emulsifiable concentrate composition according to any one of Inventions 1 to 4, wherein the surfactant is those composed of an anionic surfactant and a nonionic surfactant.

### [Invention 6]

The emulsifiable concentrate composition according to Invention 5, wherein the anionic surfactant is an alkylarylsulfonic acid salt.

### [Invention 7]

The emulsifiable concentrate composition according to any one of Inventions 1 to 6, wherein the hydrophobic agrochemically active compound is an insecticidally active compound, a fungicidally active compound and a herbicidally active compound.

### {Invention 8]

The emulsifiable concentrate composition according to any one of Inventions 1 to 6, wherein the hydrophobic agrochemically active compound is a neonicotinoid insecticidally active compound.

### [Invention 9]

The emulsifiable concentrate composition according to any one of Inventions 1 to 6, wherein the hydrophobic agrochemically active compound is at least one compound selected from the group consisting of sulfonyl urea herbicidally active compounds and dicarboxyimide herbicidally active compounds.

### [Invention 10]

The emulsifiable concentrate composition according to any one of Inventions 1 to 9, wherein the ether compound of the formula (1) is dipropylene glycol dimethyl ether, bis(2-ethoxyethyl)ether or bis[2-(2-methoxyethoxy)ethyl]ether.

### [Invention 11]

A water-diluted liquid which is obtained by diluting the emulsifiable concentrate composition according to any one of Inventions 1 to 10 with water 10 to 5,000 times.

### Effects of the Invention

The emulsifiable concentrate composition of the present invention (hereinafter referred to as the present emulsifiable concentrate composition) has satisfactory low-temperature storage stability of the composition and has satisfactory emulsion stability in the state of a water-diluted liquid, and also has excellent properties required as a formulation containing an agrochemically active compound.

### Best Mode for Carrying Out the Invention

In the present invention, usually, the hydrophobic agrochemically active compound means an agrochemically active compound having the solubility in water at 25°C of less than 1,000 ppm. The hydrophobic agrochemically active compound would be in the form of either a solid or a liquid at 25°C.

Examples of the agrochemically active compound include herbicidally active compounds, fungicidally active compounds, insecticide (acaricide) active compounds and plant growth control compounds, and specific examples thereof are as follows.

Examples of the herbicidally active compound include:
dicarboxyimide herbicidally active compounds such as flumiclorac-pentyl [herbicide compound 1], flumioxazin [herbicide compound 2] and cinidon-ethyl [herbicide compound 3];
pyridazinone herbicidally active compounds such as flufenpyr-ethyl [herbicide compound 4] and brompyrazone [herbicide compound 5];
uracil herbicidally active compounds such as butafenacil [herbicidal compound 6], bromacil [herbicide compound 7], flupropacil [herbicide compound 8] and benzfendizone [herbicide compound 9];
triazolone herbicidally active compounds such as carfentrazone-ethyl [herbicide compound 10] and sulfentrazone [herbicide compound 11];
diphenylether herbicidally active compounds such as lactofen [herbicide compound 12], bifenox [herbicide compound 13], chlornitrofen [herbicide compound 14] and chlormetoxinyl [herbicide compound 15];
sulfonylurea herbicidally active compounds such as sulfosulfuron [herbicide compound 16], imazosulfuron [herbicide compound 17], nicosulfuron [herbicide compound 18], primisulfuron-methyl [herbicide compound 19], rimsulfuron [herbicide compound 20], halosulfuron-methyl [herbicide compound 21], prosulfuron [herbicide compound 22] and thifensulfuron-methyl [herbicide compound 23];
phenoxypropionic acid herbicidally active compounds such as chlorazifop [herbicide compound 24], diclofop [herbicide compound 25] and fluazifop [herbicide compound 26];
thiazolopyrimidine herbicidally active compounds such as diclosulam [herbicide compound 27], cloransulam [herbicide compound 28], flumetsulam [herbicide compound 29], penoxsulam [herbicide compound 30], pyroxsulam [herbicide compound 31] and metosulam [herbicide compound 32];
anilide herbicidally active compounds such as picolinafen [herbicide compound 33], flufenacet [herbicide compound 34], and mefenacet [herbicide compound 35];
triazine herbicidally active compounds such as atrazine [herbicide compound 36] and metribuzin [herbicide compound 37];
urea herbicidally active compounds such as fluometuron [herbicide compound 38], isoproturon [herbicide compound 39] and dymron [herbicide compound 40];
imidazoline herbicidally active compounds such as imazapyr [herbicide compound 41], imazaquin [herbicide compound 42] and imazethapyr [herbicide compound 43];
chloroacetamide herbicidally active compounds such as pretilachlor [herbicide compound 44] and butachlor [herbicide compound 45];
thiolcarbamate herbicidally active compounds such as benthiocarb [herbicide compound 46], esprocarb [herbicide compound 47] and molinate [herbicide compound 48];
amide herbicidally active compounds such as bromobutide [herbicide compound 49], propanil [herbicide compound 50] and cafenstrole [herbicide compound 51];
benzoylpyrazole herbicidally active compounds such as pyrazoxyfen [herbicide compound 52] and benzofenap [herbicide compound 53];
methyl={2-chloro-4-fluoro-5-[5,6,7,8-tetrahydro-3-oxo-1H,3H-[1,3,4]thiadiazolo[3,4-a]pyridazin-1-ylideneamino]phenylthio}acetate [herbicide compound 54];
N-benzyl-2-(α,α,α,4-tetrafluoro-m-tolyloxy)butylamide [herbicide compound 55]; and
2-(2,4-dichloro-5-prop-2-ynyloxyphenyl)-5,6,7,8-tetrahydro-1,2,4-triazolo[4,3-a]pyridin-3(2H)-one [herbicide compound 56].

Examples of the fungicidally active compound include:
azole fungicidally active compounds such as propiconazole [fungicide compound 1], triadimenol [fungicide compound 2], prochloraz [fungicide compound 3], penconazole [fungicide compound 4], tebuconazole [fungicide compound 5], flusilazole [fungicide compound 6], diniconazole [fungicide compound 7], bromuconazole [fungicide compound 8], epoxiconazole [fungicide compound 9], difenoconazole [fungicide compound 10], cyproconazole [fungicide compound 11], metconazole [fungicide compound 12], triflumizole [fungicide compound 13], tetraconazole [fungicide compound 14], myclobutanil [fungicide compound 15], fenbuconazole [fungicide compound 16], hexaconazole [fungicide compound 17], fluquinconazole [fungicide compound 18], triticonazole [fungicide compound 19], bitertanol [fungicide compound 20], imazalil [fungicide compound 21] and flutriafol [fungicide compound 22];
morpholine fungicidally active compounds such as fenpropimorph [fungicide compound 23], tridemorph [fungicide compound 24], fenpropimorph [fungicide compound 25] and dimethomorph [fungicide compound 26];
benzimidazole fungicidally active compounds such as carbendazim [fungicide compound 27], benomyl [fungicide compound 28], thiabendazole [fungicide compound 29] and thiophanate-methyl [fungicide compound 30];
strobilurin fungicidally active compounds such as azoxystrobin [fungicide compound 31], trifloxystrobin [fungicide compound 32], picoxystrobin [fungicide compound 33], pyraclostrobin [fungicide compound 34], dimoxystrobin [fungicide compound 35], fluoxastrobin [fungicide compound 36], metominostrobin [fungicide compound 37] and orysastrobin [fungicide compound 38];
dicarboxyimide fungicidally active compounds such as procymidone [fungicide compound 39], iprodione [fungicide compound 40] and vinclozolin [fungicide compound 41];
carboxyamide fungicidally active compounds such as furametpyr [fungicide compound 42], mepronil [fungicide compound 43], flutolanil [fungicide compound 44] and trifluzamide [fungicide compound 45];
anilinopyrimidine fungicidally active compounds such as cyprodinil [fungicide compound 46], pyrimethanil [fungicide compound 47] and mepanipyrim [fungicide compound 48];
phenylpyrrole fungicidally active compounds such as fenpiclonil [fungicide compound 49] and fludioxonil [fungicide compound 50];
carbamate fungicidally active compounds such as iprovalicarb [fungicide compound 51], benthiavalicarb [fungicide compound 52] and diethofencarb [fungicide compound 53];
pyridine fungicidally active compounds such as boscalid [fungicide compound 54] and fluazinam [fungicide compound 55];
(Z)-2'-methylacetophenone=4,6-dimethylpyrimidin-2-ylhydrazone, 1-(methoxycarbonyl)-2-(1-methylethyl)-4-(2,6-dichlorophenyl)-5-amino-1H-pyrazol-3-one [fungicide compound 56];
1-[(ethylthio)carbonyl]-2-(1-methylethyl)-4-(2,6-dichlorophenyl)-5-amino-1H-pyrazol-3-one [fungicide compound 57];
1-[(2-propenylthio)carbonyl]-2-(1-methylethyl)-4-(2-methylphenyl)-5-amino-1H-pyrazol-3-one [fungicide compound 58];
5-methyl-1,2,4-triazolo-[3,4-b][1,3] benzothiazole [fungicide compound 59]; and 1,2,5,6-tetrahydropyrrolo[3,2,1-ij]quinolin-4-one, 3-allyloxy-1,2-benzothiazole=1,1-dioxide [fungicide compound 60].

Examples of the insecticide (acaricide) active compound include:
organophosphorous insecticidally active compounds such as fenitrothion [insecticide compound 1], diazinon [insecticide compound 2] and chlorpyrifos [insecticide compound 3];
carbamate insecticidally active compounds such as benfuracarb [insecticide compound 4], propoxur [insecticide compound 5], carbosulfan [insecticide compound 6], carbaryl [insecticide compound 7], aldicarb [insecticide compound 8] and fenothiocarb [insecticide compound 9];
pyrethroid insecticidally active compounds such as ethofenprox [insecticide compound 10], fenvalerate [insecticide compound 11], esfenvalerate [insecticide compound 12], fenpropathrin [insecticide compound 13], cypermethrin [insecticide compound 14], permethrin [insecticide compound 15], cyhalothrin [insecticide compound 16], deltamethrin [insecticide compound 17], cycloprothrin [insecticide compound 18], fluvalinate [insecticide compound 19], bifenthrin [insecticide compound 20], halfenprox [insecticide compound 21], tralomethrin [insecticide compound 22], silafluofen [insecticide compound 23], d-fenothrin [insecticide compound 24], cyphenothrin [insecticide compound 25], d-resmethrin [insecticide compound 26], acrinathrin [insecticide compound 27], cyfluthrin [insecticide compound 28], tefluthrin [insecticide compound 29], transfluthrin [insecticide compound 30], tetramethrin [insecticide compound 31], allethrin [insecticide compound 32], prallethrin [insecticide compound 33], empenthrin [insecticide compound 34], imiprothrin [insecticide compound 35] and d-furamethrin [insecticide compound 36];
neonicotinoid insecticidally active compounds such as clothianidin [insecticide compound 37], imidacloprid [insecticide compound 38], thiamethoxam [insecticide compound 39] and thiacloprid [insecticide compound 40]; benzoylphenylurea insecticidally active compounds such as chlorfluazuron [insecticide compound 41], teflubenzuron [insecticide compound 42], flufenoxuron [insecticide compound 43], bistrifluron [insecticide compound 44], buprofezin [insecticide compound 45] and triflumuron [insecticide compound 46];
pyrazole insecticidally active compounds such as acetoprole [insecticide compound 47], ethiprole [insecticide compound 48], fipronil [insecticide compound 49] and pyrachlophos [insecticide compound 50];
juvenile hormone like insecticidally active compounds such as pyriproxyfen [insecticide compound 51] and fenoxycarb [insecticide compound 52];
(RS)-5-tert-butyl-2-[2-(2,6-difluorophenyl)-4,5-dihydro-1,3-oxazol-4-yl]phenetole [insecticide compound 53]; and 2,6-dichloro-4-(3,3-dichloroallyloxy)phenyl=3-[5-(trifluoromethyl)-2-pyridyloxy]propyl=ether [insecticide compound 54].

Examples of the plant growth control compound include:
azole plant growth control compounds such as uniconazole P [plant growth control compound 1] and paclobutrazol [plant growth control compound 2]; and
(RS)-4'-chloro-2'-(α-hydroxybenzyl)isonicotineanilide [plant growth control compound 3].

The agrochemically active compounds described above are those described in known documents such as The Pesticide Manual, 13th Edition (published in 1987 by The British Crop Protection Council).

In the present emulsifiable concentrate composition, the hydrophobic agrochemically active compound is preferably a herbicidally active compound, a fungicidally active compound or an insecticidally active compound. Such a herbicidally active compound is preferably a dicarboxyimide herbicidally active compound, a sulfonyl urea herbicidally active compound, a thiazolopyrimidine herbicidally active compound, an anilide herbicidally active compound or an amide herbicidally active compound, and more preferably a dicarboxyimide herbicidally active compound or a sulfonyl urea herbicidally active compound. Such an insecticidally active compound is preferably a neonicotinoid insecticidally active compound or a juvenile hormone like insecticidally active compound, and more preferably a neonicotinoid insecticidally active compound.

Although the hydrophobic agrochemically active compound contained in the present emulsifiable concentrate composition is not limited to one compound, the total amount of the hydrophobic agrochemically active compounds is 0.5 to 25% by weight in the present emulsifiable concentrate composition.

In the present invention, the surfactant can be any of anionic surfactants, nonionic surfactants and cationic surfactants, and surfactants composed of an anionic surfactant and a nonionic surfactant are preferred. More preferably, the weight ratio of an anionic surfactant to a nonionic surfactant is within a range from 1 : 0.1 to 1 : 10.

Examples of the anionic surfactant include alkylarylsulfonic acid salts such as dodecylbenzenesulfonic acid salts; polyoxyethylene (poly)aryl aryl ether sulfuric acid esters such as polyoxyethylene distyryl phenyl ether sulfuric acid; polyoxyethylene (poly)aryl aryl ether phosphoric acid esters such as polyoxyethylene tristyryl phenyl ether phosphoric acid; polyoxyethylene alkyl aryl phosphoric acid esters and polyoxyethylene alkyl phosphoric acid esters. The anionic surfactant is preferably an alkylarylsulfonic acid salt, and particularly a dodecylbenzenesulfonic acid salt (sodium salt and calcium salt).

In general, examples of the cation in the sulfonic acid salt, sulfuric acid ester salt and phosphoric acid ester salt include sodium, calcium and ammonium ions.

As the dodecylbenzenesulfonic acid salt, for example, commercially available surfactants such as Rhodacal 70^{™}, Rhodacal 70/C^{™} and Rhodacal 60/BE-C^{™} (each one is manufactured by Rhodia Nikka Co., Ltd.) can be used.

As the polyoxyethylene distyryl phenyl ether sulfuric acid, for example, commercially available surfactants such as Soprophor DSS/7^{™} (manufactured by Rhodia Nikka Co., Ltd.) can be used.

As the polyoxyethylene tristyryl phenyl ether phosphoric acid, for example, commercially available surfactants such as Soprophor FLK^{™} (manufactured by Rhodia Nikka Co., Ltd.) can be used.

As the polyoxyethylene alkyl aryl phosphoric acid ester, commercially available surfactants such as Rhodafac PS/17^{™} (manufactured by Rhodia Nikka Co., Ltd.) can be used.

As the polyoxyethylene alkyl phosphoric acid ester, commercially available surfactants such as Rhodafac MB^{™} (manufactured by Rhodia Nikka Co., Ltd.) can be used.

Examples of the nonionic surfactant include polyoxyethylene-polyoxypropylene block polymers, fatty acid esters of polyoxyethylene-polyoxypropylene block polymers, polyoxyethylene polyoxypropylene alkyl ethers, polyoxyethylene polyoxypropylene polyaryl ethers, polyoxyethylene polyoxypropylene alkyl aryl ethers, polyoxyethylene alkyl aryl ethers, polyoxyethylene polyaryl ethers, polyoxyethylene vegetable oils such as polyoxyethylene castor oil, polyoxyethylene hydrogenated vegetable oils such as polyoxyethylene hydrogenated castor oil, polyoxyethylene polyoxypropylene vegetable oils such as polyoxyethylene polyoxypropylene castor oil, polyoxyethylene fatty acid esters, polyoxyethylene alkyl ethers, polyoxyethylene tristyryl phenyl phosphate diester, polyoxyethylene polyoxypropylene tristyryl phenyl phosphate diester, fatty acid alcohol polyglycol ethers and glycerin fatty acid esters, and preferably a polyoxyethylene-polyoxypropylene block polymers, fatty acid esters of polyoxyethylene-polyoxypropylene block polymers, polyoxyethylene vegetable oils, polyoxyethylene hydrogenated vegetable oils, polyoxyethylene alkyl aryl ethers, polyoxyethylene tristyryl phenyl phosphate diester and polyoxyethylene polyoxypropylene tristyryl phenyl phosphate diester, and more preferably a polyoxyethylene-polyoxypropylene block polymers and fatty acid esters of polyoxyethylene-polyoxypropylene block polymers.

As the polyoxyethylene-polyoxypropylene block polymer, commercially available surfactants such as Teric PE 64^{™} (manufactured by Huntsman) can be used.

As the polyoxyethylene polyoxypropylene alkyl ether, commercially available surfactants such as Antarox BO/327^{™}, 340^{™} and Antarox BO^{™} series (each one is manufactured by Rhodia Nikka Co., Ltd.) can be used.

As the polyoxyethylene alkyl aryl ether, commercially available surfactants such as Sorpol T/26^{™} (manufactured by Toho Chemical Industry Co., Ltd.) can be used.

As the polyoxyethylene castor oil, commercially available surfactants such as Alkamuls OR/40^{™} and Alkamuls BR^{™} (each one is manufactured by Rhodia Nikka Co., Ltd.) can be used.

As the polyoxyethylene hydrogenated castor oil, commercially available surfactants such as HCO-20^{™} (manufactured by Nikko Chemicals Co., Ltd.) can be used.

As the polyoxyethylene polyoxypropylene castor oil, commercially available surfactants, for example, CR series such as Antarox CR/255^{™} and CR/405^{™} (each one is manufactured by Rhodia Nikka Co., Ltd.) can be used.

As the polyoxyethylene fatty acid ester, commercially available surfactants such as Newcol 150^{™} (manufactured by Nippon Nyukazai Co., Ltd.) can be used.

As the polyoxyethylene alkyl ether, commercially available surfactants such as Newcol 1100^{™} and Newcol 1105^{™} (each one is manufactured by Nippon Nyukazai Co., Ltd.) can be used.

As the glycerin fatty acid ester, commercially available surfactants such as Pionin D-900^{™} series (manufactured by Takemoto Oil & Fat Co., Ltd.) can be used.

In the present emulsifiable concentrate composition, the total amount of the surfactants is within a range from 5 to 15% by weight. When the above surfactant is composed of an anionic surfactant and a nonionic surfactant, the amount of the anionic surfactant is 2 to 12% by weight, and also the amount of the nonionic surfactant is 2 to 12 % by weight.

In the present invention, examples of the aromatic hydrocarbon solvent include alkylbenzenes (e.g. toluene, ethylbenzene, xylene and tetramethylbenzene), alkylnaphthalenes (e.g. methylnaphthalene), diphenylethane, dixylylethane, phenylxylylethane, and a mixture thereof.

As the above aromatic hydrocarbon solvent, a commercially available solvent can be used.

Examples of the commercially available solvent include Hisol SAS-296 (a mixture of 1-phenyl-1-xylylethane and 1-phenyl-1-ethylphenylethane, trade name of Nippon Oil Corporation), Cactus Solvent HP-MN (methylnaphthalene 80%, trade name of Japan Energy Corporation), Cactus Solvent HP-DMN (dimethylnaphthalene 80%, trade name of Japan Energy Corporation), Cactus Solvent P-100 (alkylbenzene having 9 to 10 carbon atoms, trade name of Japan Energy Corporation), Cactus Solvent P-150 (alkylbenzene, trade name of Japan Energy Corporation), Cactus Solvent P-180 (a mixture of methylnaphthalene and dimethylnaphthalene, trade name of Japan Energy Corporation), Cactus Solvent P-200 (a mixture of methylnaphthalene and dimethylnaphthalene, trade name of Japan Energy Corporation), Cactus Solvent P-220 (a mixture of methylnaphthalene and dimethylnaphthalene, trade name of Japan Energy Corporation), Cactus Solvent PAD-1 (dimethyl-monoisopropylnaphthalene, trade name of Japan Energy Corporation), Solvesso 100 (mainly composed of, as aromatic hydrocarbons, C9-C10 dialkyl and trialkylbenzene, trade name of Exxon Mobil Corporation), Solvesso 150 (mainly composed of, as aromatic hydrocarbons, C10-C11 alkylbenzene, trade name of Exxon Mobil Corporation), Solvesso 150ND (mainly composed of, as aromatic hydrocarbons, C10-C11 alkylbenzene, trade name of Exxon Mobil Chemical Company), Solvesso 200 (mainly composed of, as aromatic hydrocarbons, C10-C14 alkylnaphthalene, trade name of Exxon Mobil Corporation), Solvesso 200ND (mainly composed of, as aromatic hydrocarbons, C10-C14 alkylnaphthalene, trade name of Exxon Mobil Chemical Company), Ultra Low Naphthalene Aromatic 150 (mainly composed of, as aromatic hydrocarbons, C10-C11 alkylbenzene, trade name of Exxon Mobil Chemical Company), Ultra Low Naphthalene Aromatic 200 (mainly composed of, as aromatic hydrocarbons, C10-C14 alkylnaphthalene, trade name of Exxon Mobil Chemical Company), Swasol 100 (toluene, trade name of Maruzen Petrochemical Co., Ltd.) and Swasol 200 (xylene, trade name of Maruzen Petrochemical Co., Ltd.).

In the present emulsifiable concentrate composition, the total amount of the aromatic hydrocarbon solvents is within a range from 2 to 60% by weight, preferably 5 to 45% by weight.

In the present invention, as the ether compound of the formula (1) and 1,3-dimethyl-2-imidazolidinone, commercially available products can be used, respectively.

Examples of the ether compound of the formula (1) (hereinafter sometimes referred to as the present ether compound) include triethylene glycol ether, tetraethylene glycol ether, pentaethylene glycol ether, dipropylene glycol dimethyl ether, bis(2-ethoxyethyl)ether and bis[2-(2-methoxyethoxy)ethyl]ether.

The present ether compound is an ether compound of the formula (1) wherein each of R¹ and R² is preferably a methyl group or an ethyl group and, preferably, at least one of A¹, A² and A³ is an ethylene group and n is 0 or 1.

In the present emulsifiable concentrate composition, the amount of the present ether compound is within a range from 2 to 60% by weight, preferably 2 to 45% by weight. The amount of 1,3-dimethyl-2-imidazolidinone [DMI] is within a raneg of 12 to 90% by weight, preferably 15 to 80% by weight.

In the present emulsifiable concentrate composition, the weight ratio of 1,3-dimethyl-2-imidazolidinone [DMI] to the present ether compound (= DMI : the present ether compound) is with a range from 1 : 0.03 to 1 : 2, preferably 1 : 0.05 to 1 : 1.5.

In the present emulsifiable concentrate composition, the weight ratio of 1,3-dimethyl-2-imidazolidinone to the aromatic hydrocarbon solvent is preferably 1 : 0.05 to 1 : 1.5, more preferably 1 : 0.05 to 1 : 1.0.

The mixed solvent containing the aromatic hydrocarbon solvent, the present ether compound and 1,3-dimethyl-2-imidazolidinone, wherein the ratio between the aromatic hydrocarbon solvent and the present ether compound is within the above ratio, is useful as an organic solvent for an agrochemical formulation, particularly an emulsifiable concentrate composition.

The present emulsifiable concentrate composition can contain a formulation auxiliary such as antioxidants, coloring agents, fragment materials, enhancers and safeners, if necessary.

Examples of the antioxidants include 3-/2-t-butyl-4-hydroxyanisole and butylated hydroxytoluene, and examples of the coloring agent include Rhodamine B, Yellow No. 4, Blue No. 1 and Red No. 2.

In the present emulsifiable concentrate composition, the total amount of the formulation auxiliary is within a range from 0 to 5% by weight.

Embodiments of the present emulsifiable concentrate composition are as follows.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone [DMI], and
0 to 5% by weight of a formulation auxiliary, wherein
the weight ratio of DMI to the present ether compound (i.e. DMI : the present ether compound, the same shall be applied to the following embodiments) is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.0.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 0.5.

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.0.

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is with a range from 1 : 0.05 to 1 : 0.5.

An emulsifiable concentrate composition consists essentially of:
0.5 to 25% by weight of a hydrophobic agrochemically active compound,
5 to 15% by weight of a surfactant composed of an alkyl aryl sulfonic acid and a polyoxyethylene-polyoxypropylene block polymer,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant composed of an alkyl aryl sulfonic acid and a polyoxyethylene-polyoxypropylene block polymer,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.0.

An emulsifiable concentrate composition consists essentially of:
0.5 to 25% by weight of a hydrophobic agrochemically active compound,
5 to 15% by weight of a surfactant composed of an alkyl aryl sulfonic acid and a polyoxyethylene-polyoxypropylene block polymer,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 0.5.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is within a range from 1 : 0.05 to 1 : 1.0.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is within a range from 1 : 0.05 to 1 : 0.5.

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is with a range from 1 : 0.05 to 1 : 1.5.

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
a weight ratio of 1,3-dimethyl-2-imidazolidinone to the aromatic hydrocarbon solvent is within a range from 1 : 0.05 to 1 : 1.5, and
a weight ratio of 1,3-dimethyl-2-imidazolidinone to the present ether compound is within a range from 1 : 0.05 to 1 : 1.0.

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is within a range from 1 : 0.05 to 1 : 0.5.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
a weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1.0, and
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 0.5, and
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1.0, and
the weight ratio of 1,3-dimethyl-2-imidazolidinone to the present ether compound is within a range from 1 : 0.05 to 1 : 1.5

An emulsifiable concentrate composition consists essentially of:
0.5 to 25% by weight of a hydrophobic agrochemically active compound,
5 to 15% by weight of a surfactant composed of an anionic surfactant and a nonionic surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 0.5, and
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant composed of an alkylarylsulfonic acid and a polyoxyethylene-polyoxypropylene block polymer,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of a hydrophobic agrochemically active compound,
5 to 15% by weight of a surfactant composed of an alkylarylsulfonic acid and a polyoxyethylene-polyoxypropylene block polymer,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is within a range from 1 : 0.05 to 1 : 1.0.

An emulsifiable concentrate composition consists essentially of:
0.5 to 25% by weight of a hydrophobic agrochemically active compound,
5 to 15% by weight of a surfactant composed of an alkylarylsulfonic acid and a polyoxyethylene-polyoxypropylene block polymer,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the aromatic hydrocarbon solvent is within a range from 1 : 0.05 to 1 : 1.5, and
the weight ratio of 1,3-dimethyl-2-imidazolidinone to the present ether compound is within a range from 1 : 0.05 to 1 : 0.5.

An emulsifiable concentrate composition consists essentially of:
0.5 to 25% by weight of herbicide compound 1,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of herbicide compound 2,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of herbicide compound 17,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of herbicide compound 27,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of herbicide compound 33
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of herbicide compound 49,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of herbicide compound 55,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of fungicide compound 22,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of fungicide compound 26,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of fungicide compound 39,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of fungicide compound 56,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of fungicide compound 58,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of insecticide compound 37,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifialbe concentrate composition consists essentially of:
0.5 to 25% by weight of insecticide compound 51,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of insecticide compound 53,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
a weight ratio of 1,3-dimethyl-2-imidazolidinone to the present ether compound is within a range from 1 : 0.05 to 1 : 1.5.

An emulsifiable concentrate composition consists essentially of:
0.5 to 25% by weight of insecticide compound 54,
5 to 15% by weight of a surfactant,
2 to 60% by weight of an aromatic hydrocarbon solvent,
2 to 60% by weight of the present ether compound,
12 to 90% by weight of 1,3-dimethyl-2-imidazolidinone, and
0 to 5% by weight of a formulation auxiliary, wherein
the weight ratio of 1,3-dimethyl-2-imidazolidinone to the present ether compound is within a range from 1 : 0.05 to 1 : 1.5.

The present emulsifiable concentrate composition can be produced, for example, by adding a hydrophobic agrochemically active compound, a surfactant, and a formulation auxiliary which is an optionally added component to a mixture of an aromatic hydrocarbon solvent, the present ether compound and 1,3-dimethyl-2-imidazolidinone, if necessary, under heating (about 70°C or lower) conditions, stirring the mixture to form a homogeneous mixture and then, if necessary, filtering the mixture.

The present emulsifiable concentrate composition is a homogeneous liquid composed of a substantially single continuous phase.

The present emulsifiable concentrate composition is used after diluting with water. The present emulsifiable concentrate composition can be usually diluted with a 10-to 5,000-fold amount, preferably a 20- to 2,500-fold amount, of water. In general, the water to be used for dilution can be either hard water or soft water, further it may be water which is added an adjuvant such as a spreader.

### Examples

Hereinafter, the present invention will be described in more detail by way of Preparation Examples and Test Examples, but the present invention is not limited thereto. Ingredients used in the Examples are as follows:
Anionic surfactant A: calcium dodecylbenzene sulfonate (Witconate P-1220EH^{™}, manufactured by Akzo Nobel);
Nonionic surfactant A: polyoxyethylene-polyoxypropylene block polymer (Toximul 8320^{™}, manufactured by Stepan Company);
Aromatic hydrocarbon solvent A: Solvesso 200ND^{™} (mainly C10-C14 alkyl naphthalene, manufactured by Exxon Mobil Chemical);
DPGDME: dipropylene glycol dimethyl ether (manufactured by Wako Pure Chemical Industries, Ltd.);
BMEEE: bis[2-(2-methoxyethoxy)ethyl]ether (manufactured by Wako Pure Chemical Industries, Ltd.);
BEEE: bis(2-ethoxyethyl)ether (manufactured by Wako Pure Chemical Industries, Ltd.);
DMI: 1,3-dimethyl-2-imidazolidinone(manufactured by China CSIMC Pharmchem Factory).

### Preparation Example 1

In a 100 ml measuring flask, 5.0 g of a herbicide compound 2, 3.0 g of anionic surfactant A, 3.0 g of nonionic surfactant A, 35.0 g of DMI and 20.0 g of aromatic hydrocarbon solvent A were put at room temperature, and DPGDME (corresponding to about 34 g) was added to make the total volume to 100 ml. The mixture was stirred with warming (about 70°C) to form a homogenous mixture, thereby preparing an emulsifiable concentrate composition of Example 1 (the present emulsifiable concentrate composition 1).

### Preparation Examples 2 to 42

According to the same procedure as that described in Preparation Example 1, emulsifiable concentrate compositions of Examples 2 to 42 (the present emulsifiable concentrate compositions 2 to 42) were prepared at ratios of ingredients shown in Table 1 to Table 12, respectively.

**Table 1**

| | Example 1 | Example 2 | Example 3 | Example 4 |
|---|---|---|---|---|
| Herbicide compound 2 | 5.0 | 5.0 | | |
| Fungicide compound 58 | | | 5.0 | 5.0 |
| Anionic surfactant A | 3.0 | 3.0 | 3.0 | 3.0 |
| Nonionic surfactant A | 3.0 | 3.0 | 3.0 | 3.0 |
| DPGDME | ca 34(*) | ca 19(*) | ca 34(*) | ca 19(*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The ingredient was added in the amount shown in the table to make the total volume to 100 ml. | | | | |

**Table 2**

| | Example 5 | Example 6 | Example 7 | Example 8 |
|---|---|---|---|---|
| insecticide compound 37 | 5.0 | 5.0 | | |
| Herbicide compound 17 | | | 5.0 | 5.0 |
| Anionic surfactant A | 3.0 | 3.0 | 3.0 | 3.0 |
| Nonionic surfactant A | 3.0 | 3.0 | 3.0 | 3.0 |
| DPGDME | ca 34(*) | ca 19(*) | ca 34(*) | ca 19(*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The ingredient was added in the amount shown in the table to make the total volume to 100 ml. | | | | |

**Table 3**

| | Example 9 | Example 10 | Example 11 | Example 12 |
|---|---|---|---|---|
| Herbicide compound 2 | 5.0 | 5.0 | 5.0 | 5.0 |
| Anionic surfactant A | 6.0 | 6.0 | 6.0 | 6.0 |
| Nonionic surfactant A | 6.0 | 6.0 | 6.0 | 6.0 |
| DPGDME | ca 38(*) | ca 8(*) | ca 23(*) | ca 3(*) |
| DMI | 35.0 | 35.0 | 50.0 | 50.0 |
| Aromatic hydrocarbon solvent A | 10.0 | 40.0 | 10.0 | 30.0 |

| | | | | |
|---|---|---|---|---|
| *: The ingredient was added in the amount shown in the table to make the total volume to 100 ml. | | | | |

**Table 4**

| | Example 13 | Example 14 |
|---|---|---|
| Herbicide compound 2 | 5.0 | 5.0 |
| Anionic surfactant A | 3.0 | 3.0 |
| Nonionic surfactant A | 3.0 | 3.0 |
| DPGDME | ca 9(*) | ca 4(*) |
| DMI | 75.0 | 75.0 |
| Aromatic hydrocarbon solvent A | 5.0 | 10.0 |

| | | |
|---|---|---|
| *: The ingredient was added in the amount shown in the table to make the total volume to 100 ml. | | |

**Table 5**

| | Example 15 | Example 16 | Example 17 | Example 18 |
|---|---|---|---|---|
| Herbicide compound 2 | 5.0 | 5.0 | | |
| Fungicide compound 58 | | | 5.0 | 5.0 |
| Anionic surfactant A | 3.0 | 3.0 | 3.0 | 3.0 |
| Nonionic surfactant A | 3.0 | 3.0 | 3.0 | 3.0 |
| BMEEE | ca 34(*) | ca 19(*) | ca 34(*) | ca 19(*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The ingredient was added in the amount shown in the table to make the total volume to 100 ml. | | | | |

**Table 6**

| | Example 19 | Example 20 | Example 21 | Example 22 |
|---|---|---|---|---|
| Insecticide compound 37 | 5.0 | 5.0 | | |
| Herbicide compound 17 | | | 5.0 | 5.0 |
| Anionic surfactant A | 3.0 | 3.0 | 3.0 | 3.0 |
| Nonionic surfactant A | 3.0 | 3.0 | 3.0 | 3.0 |
| BMEEE | ca 34(*) | ca 19(*) | ca 34(*) | ca 19(*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The ingredient was added in the amount shown in the table to make the total volume to 100 ml. | | | | |

**Table 7**

| | Example 23 | Example 24 | Example 25 | Example 26 |
|---|---|---|---|---|
| Herbicide compound 2 | 5.0 | 5.0 | 5.0 | 5.0 |
| Anionic surfactant A | 6.0 | 6.0 | 6.0 | 6.0 |
| Nonionic surfactant A | 6.0 | 6.0 | 6.0 | 6.0 |
| BMEEE | ca 38(*) | ca 8(*) | ca 23(*) | ca 3(*) |
| DMI | 35.0 | 35.0 | 50.0 | 50.0 |
| Aromatic hydrocarbon solvent A | 10.0 | 40.0 | 10.0 | 30.0 |

| | | | | |
|---|---|---|---|---|
| *: The ingredient was added in the amount shown in the table to make the total volume to 100 ml. | | | | |

**Table 8**

| | Example 27 | Example 28 |
|---|---|---|
| Herbicide compound 2 | 5.0 | 5.0 |
| Anionic surfactant A | 3.0 | 3.0 |
| Nonionic surfactant A | 3.0 | 3.0 |
| BMEEE | ca 9(*) | ca 4(*) |
| DMI | 75.0 | 75.0 |
| Aromatic hydrocarbon solvent A | 5.0 | 10.0 |

| | | |
|---|---|---|
| *: The ingredient was added in the amount shown in the table to make the total volume to 100 ml. | | |

**Table 9**

| | Example 29 | Example 30 | Example 31 | Example 32 |
|---|---|---|---|---|
| Herbicide compound 2 | 5.0 | 5.0 | | |
| Fungicide compound 58 | | | 5.0 | 5.0 |
| Anionic surfactant A | 3.0 | 3.0 | 3.0 | 3.0 |
| Nonionic surfactant A | 3.0 | 3.0 | 3.0 | 3.0 |
| BEEE | ca 34(*) | ca 19(*) | ca 34(*) | ca 19(*) |
| DMI | 35.0 | 50.0 | 35.0 | 50.0 |
| Aromatic hydrocarbon solvent A | 20,0 | 20.0 | 20.0 | 20.0 |

| | | | | |
|---|---|---|---|---|
| *: The ingredient was added in the amount shown in the table to make the total volume to 100 ml. | | | | |

**Table 10**

| | Example 33 | Example 34 | Example 35 | Example 36 |
|---|---|---|---|---|
| Insecticide compound 37 | 5.0 | 5.0 | | |
| Herbicide compound 17 | | | 5.0 | 5.0 |
| Anionic surfactant A | 3.0 | 3.0 | 3.0 | 3.0 |
| Nonionic surfactant A | 3.0 | 3.0 | 3.0 | 3.0 |
| BEEE | ca 34(*) | ca 19(*) | ca 34(*) | ca 19(*) |
| DMI | 35.0 | 50.0 | 35.0 | 50.0 |
| Aromatic hydrocarbon solvent A | 20.0 | 20.0 | 20.0 | 20.0 |

| | | | | |
|---|---|---|---|---|
| *: The ingredient was added in the amount shown in the table to make the total volume to 100 ml. | | | | |

**Table 11**

| | Example 37 | Example 38 | Example 39 | Example 40 |
|---|---|---|---|---|
| Herbicide compound 2 | 5.0 | 5.0 | 5.0 | 5.0 |
| Anionic surfactant A | 6.0 | 6.0 | 6.0 | 6.0 |
| Nonionic surfactant A | 6.0 | 6.0 | 6.0 | 6.0 |
| BEEE | ca 38(*) | ca 8(*) | ca 23(*) | ca 3(*) |
| DMI | 35.0 | 35.0 | 50.0 | 50.0 |
| Aromatic hydrocarbon solvent A | 10.0 | 40.0 | 10.0 | 30.0 |

| | | | | |
|---|---|---|---|---|
| *: The ingredient was added in the amount shown in the table to make the total volume to 100 ml. | | | | |

**Table 12**

| | Example 41 | Example 42 |
|---|---|---|
| Herbicide compound 2 | 5.0 | 5.0 |
| Anionic surfactant A | 3.0 | 3.0 |
| Nonionic surfactant A | 3.0 | 3.0 |
| BEEE | ≈9(*) | ≈4(*) |
| DMI | 75.0 | 75.0 |
| Aromatic hydrocarbon solvent A | 5.0 | 10.0 |

| | | |
|---|---|---|
| *: The ingredient was added in the amount shown in the table to make the total volume to 100 ml. | | |

### Test Example 1 (Storage test at low temperature)

Ten ml of each of the present emulsifiable concentrate compositions 1 to 42 was sealed in a 20 ml ampoule tube. After storing at 0°C for 1 week, changes in appearance were visually observed. All of the present emulsifiable concentrate compositions 1 to 42 were transparent and clear liquids even after storage, and no sediment was observed.

### Test Example 2 (Emulsion stability)

One 1 ml of each of the present emulsifiable concentrate compositions 1 to 42 was diluted 100 times with CIPAC Standard Water A (total concentration of calcium and magnesium ions: 20 ppm) in a 100 ml measuring cylinder with stopper. After allowing to stand at 30°C for 0.5 hours, the state was visually observed. Each water-diluted liquid was kept in a stable emulsified state.

### Test Example 3 (Emulsion stability)

One ml of each of the present emulsifiable concentrate compositions 1 to 42 was diluted 100 times with CIPAC Standard Water D (total concentration of calcium and magnesium ions: 342 ppm) in a 100 ml measuring cylinder with stopper. After allowing to stand at 30°C for 0.5 hours, the state was visually observed. Each water-diluted liquid was kept in a stable emulsified state.

### Industrial Applicability

The present emulsifiable concentrate composition has satisfactory formulation stability under low temperature conditions, and also has satisfactory emulsion stability in the state of a water-diluted liquid, and is therefore useful as a formulation containing an agrochemically active compound.

## Claims

1. An emulsifiable concentrate composition comprising:
not less than 0.5% by weight but not more than 25% by weight of a hydrophobic agrochemically active compound,
not less than 5% by weight but not more than 15% by weight of a surfactant,
not less than 2% by weight but not more than 60% by weight of an aromatic hydrocarbon solvent,
not less than 2% by weight but not more than 60% by weight of an ether compound represented by the formula (1):
R¹-O-A¹-O-A²-(O-A³)ₙ-O-R² (1)
wherein R¹ and R² each represent a C1-C3 alkyl group, A¹, A² and A³ each represent an ethylene group or a propylene group, and n represents 0, 1 or 2, and
not less than 12% by weight but not more than 90% by weight of 1,3-dimethyl-2-imidazolidinone, wherein
the weight ratio of 1,3-dimethyl-2-imidazolidinone to the ether compound (i.e. 1,3-dimethyl-2-imidazolidinone : the ether compound) is within a range from 1 : 0.03 to 1 : 2.

2. The emulsifiable concentrate composition according to claim 1 which further comprises a formulation auxiliary in an amount of not more than 5% by weight based on the total amount and consists essentially of the hydrophobic agrochemically active compound, the surfactant, the aromatic hydrocarbon solvent, the ether compound of the formula (1), 1,3-dimethyl-2-imidazolidinone and the formulation auxiliary.

3. The emulsifiable concentrate composition according to claim 1 or 2, the weight ratio of 1,3-dimethyl-2-imidazolidinone to the aromatic hydrocarbon solvent (i.e. 1,3-dimethyl-2-imidazolidinone : aromatic hydrocarbon solvent) is with a range from 1 : 0.05 to 1 : 1.5.

4. The emulsifiable concentrate composition according to any one of claims 1 to 3, wherein the weight ratio of 1,3-dimethyl-2-imidazolidinone to the ether compound of the formula (1) (i.e. 1,3-dimethyl-2-imidazolidinone : the ether compound) is with a range from 1 : 0.05 to 1 : 1.5.

5. The emulsifiable concentrate composition according to any one of claims 1 to 4, wherein the surfactant is composed of an anionic surfactant and a nonionic surfactant.

6. The emulsifiable concentrate composition according to claim 5, wherein the anionic surfactant is an alkylarylsulfonic acid salt.

7. The emulsifiable concentrate composition according to any one of claims 1 to 6, wherein the hydrophobic agrochemically active compound is an insecticidally active compound, a fungicidally active compound and a herbicidally active compound.

8. The emulsifiable concentrate composition according to any one of claims 1 to 6, wherein the hydrophobic agrochemically active compound is a neonicotinoid insecticidally active compound.

9. The emulsifiable concentrate composition according to any one of claims 1 to 6, wherein the hydrophobic agrochemically active compound is at least one compound selected from the group consisting of sulfonyl urea herbicidally active compounds and dicarboxyimide herbicidally active compounds.

10. The emulsifiable concentrate composition according to any one of claims 1 to 9, wherein the ether compound of the formula (1) is dipropylene glycol dimethyl ether, bis(2-ethoxyethyl)ether or bis[2-(2-methoxyethoxy)ethyl]ether.

11. A water-diluted liquid which is obtained by diluting the emulsifiable concentrate composition according to any one of claims 1 to 10 with water 10 to 5,000 times.
